# EUROPÄISCHE PATENTSCHRIFT

(11) **EP 4 133 234 B1**
(45) Veröffentlichungstag und Bekanntmachung des Hinweises auf die Patenterteilung: **25.12.2024**
(21) Anmeldenummer: 21716291.6
(22) Anmeldetag: 25.03.2021
(51) Int. Cl.: G01B 11/25, G01B 11/245

(54) **OPTISCHE MESSEINRICHTUNG UND VERFAHREN ZUR ERMITTLUNG DER DREIDIMENSIONALEN FORM EINES OBJEKTES**
OPTICAL MEASURING DEVICE AND METHOD FOR ASCERTAINING THE THREE-DIMENSIONAL SHAPE OF AN OBJECT
DISPOSITIF ET PROCÉDÉ DE MESURE OPTIQUE POUR DÉTERMINER LA FORME TRIDIMENSIONNELLE D'UN OBJET

(30) Priorität: 06.04.2020 DE 102020109520
(43) Veröffentlichungstag der Anmeldung: 15.02.2023
(73) Patentinhaber: Weber Food Technology GmbH, 35236 Breidenbach (DE)
(72) Erfinder: KÖSTER, Bernd, 38162 Cremlingen (DE)
(74) Vertreter: Kröncke, Rolf
(86) Internationale Anmeldenummer: PCT/EP2021/057762
(87) Internationale Veröffentlichungsnummer: WO 2021/204555

(56) Entgegenhaltungen:
- EP-A2- 2 363 716
- EP-B1- 2 363 716
- WO-A1-2010/133966
- DE-A1- 102017 104 998
- DE-A1- 102017 130 909
- US-A- 5 969 823
- US-A1- 2006 171 725

## Beschreibung

Die Erfindung betrifft eine optische Messeinrichtung zur Ermittlung der dreidimensionalen Form eines Objektes, die mindestens einen Lichtschnittsensor aufweist, der eine zur Projektion einer linienförmigen Markierung auf das Objekt ausgebildete Beleuchtungseinheit und mindestens eine Bildaufnahmeeinheit zur Erfassung der auf das Objekt projizierten linienförmigen Markierung hat, und eine Vorschuberfassungseinheit aufweist, die zur Erfassung des Vorschubweges des unter dem Lichtschnittsensor hindurch bewegten Objektes über die Zeit ausgebildet ist, wobei die optische Messeinrichtung zur Bestimmung von Höhenprofilen des Objektes aus der linienförmigen Markierung eingerichtet ist.

Die Erfindung betrifft weiterhin ein Verfahren zur Ermittlung der dreidimensionalen Form eines Objektes mit einer solchen optischen Messeinrichtung.

Zur Ermittlung von Objekteigenschaften ist das sogenannte Lichtschnittverfahren bekannt, bei dem z. B. mit einem Laser oder einer Linienbeleuchtung eine Lichtlinie auf die Oberfläche des zu analysierenden Objektes projiziert und das seitliche Bild mit einer Bildaufnahmeeinheit aufgenommen wird. Aus der Form der aktuellen Profillinie kann dann mittels einer entsprechenden Kalibrierung unmittelbar auf die Objekthöhe eines Profilpunktes im aktuellen Höhenprofil geschlossen werden. Ein Höhenprofil wird auch als Scanprofil bezeichnet und kann auch in Form eines Querschnittsprofils vorliegen.

DE 10 2017 130 909 A1 beschreibt eine optische Messeinrichtung mit einer ersten Beleuchtungseinheit zur Projektion einer linienförmigen Markierung auf einer Beleuchtungsebene und einer ersten Bildaufnahmeeinheit zur Erfassung der auf das Objekt projizierten linienförmigen Markierung. Es ist weiterhin eine steuerbare zweite Beleuchtungseinheit vorgesehen, die zur Projektion von Licht in einem vorgegebenen Lichtspektrum auf das Objekt ausgebildet ist, um mit einer zweiten Bildaufnahmeeinheit das von dem Objekt zurückreflektierte Licht der zweiten Beleuchtungseinheit ortsabhängig zu erfassen und dreidimensionale Oberflächeninformationen des Objektes mittels Lichtschnitts mit der linienförmigen Markierung sowie zur Ermittlung von Eigenschaften des Objektes aus dem ortsabhängig erfassten Lichtspektrum des von dem Objekt zurückreflektierten Lichtes der zweiten Beleuchtungseinheit zu ermitteln.

DE 10 2017 104 998 A1 beschreibt eine Fördereinrichtung und ein Verfahren zur Ermittlung der Oberflächengeschwindigkeit einer Transportoberfläche.

Da das Lichtschnittverfahren jeweils 3D-Daten nur innerhalb der verwendeten Lichtebene bestimmt (=Höhenprofil), die zu der Lichtlinie korrespondiert, die auf der aktuellen Objektoberfläche projiziert wird, ist eine externe Information darüber erforderlich, wie aufeinanderfolgende Höhenprofile zusammenhängen, d.h. wie sich das Objekt durch die Lichtlinie hindurchbewegt und welcher Abstand zwischen den Höhenprofilen liegt.

Wenn der Sensor z.B. mit konstanter Geschwindigkeit über das Objekt bewegt wird, kann aus der Bewegungsrichtung und dem Betrag der Geschwindigkeit die fehlende Information gewonnen werden.

Oft werden die Messungen auch so durchgeführt, dass das Messobjekt auf einem Transportband liegt und unter einem feststehenden Sensor durch dessen Lichtebene bewegt wird. Aus der bekannten Transportgeschwindigkeit kann dann der Zusammenhang zwischen den einzelnen Höhenprofilen gewonnen werden. Wenn die Bandgeschwindigkeit nicht konstant ist, insbesondere wenn auch beschleunigte Bewegungen auftreten, kommt es zu Messfehlern.

Bei der Verwendung von Inkrementalgebern, welche die Bandbewegung in Signale umsetzen, die jeweils einem konstanten Abstand entsprechen, kann in der Regel das Problem umgangen werden. Wenn die Objekte aber in der Haftung zum Transportmedium unsicher sind, kann es einen Schlupf geben zwischen der angenommenen Objektbewegung aus den Inkrementen und der tatsächlichen Objektbewegung. Die resultierende Messunsicherheit kann durch zusätzliche Bandübergänge, wo das Objektverhalten beim Transport nicht sicher unter Kontrolle ist, verstärkt werden.

Bei vielen Transportvorgängen, die kein kontrolliertes Transportmedium benutzen, wie Rutschen, Rollenbänder oder Freifallstrecken fehlen in der Regel jegliche Informationen über den Transportweg, den das Messobjekt zwischen den Höhenprofilen zurücklegt.

Bekannt sind aus EP 2 363 716 A2 die berührungslose Weg- und Geschwindigkeitserfassung anhand von aufeinanderfolgenden Bildern und einer Korrelationsanalyse zwischen zwei aufeinanderfolgenden Bildern
Ein solches Verfahren finden man hardwaretechnisch umgesetzt z.B. auch in den heutigen PC-Mäusen, die kein Laufrad mehr benutzen, sondern mit einem kleinen CMOS-Sensor von etwa 16 x 16 bis 30 x 30 Pixeln fortgesetzt Bilder vom Untergrund der PC-Maus aufnehmen und aus der Korrelation der Bildinhalte von zwei aufeinanderfolgenden Bildern die aktuellen Verschiebungen bestimmen. Die Voraussetzung ist aber unter anderem, dass der Abstand praktisch nicht variiert und im Mittel konstant bleibt.

Eine solche Situation ist bezogen auf die mit einem Lichtschnittsensor zu scannenden Objekte im Allgemeinen nicht gegeben, weil dort das Ziel eines Scanvorganges die Ermittlung von wechselnden Oberflächen und somit wechselnden Höhen und Breiten ist.

Selbst wenn über die stattfindenden Höhenvariationen ein scharfes Bild erzeugt werden kann und zwischen zwei Bildern keine nennenswerte Abstandsänderung erfolgt sowie die Produktoberfläche hinreichende Strukturen aufweist, so dass aufeinanderfolgende Bilder der verschiedenen Abstandsbereiche eine gute Korrelationsanalyse zulassen, geht die Information verloren, wie eine ermittelte Verschiebung in Pixeln mit der tatsächlichen Verschiebung des Objektes zusammenhängt, weil sich der Abbildungsmaßstab ändert.

Ausgehend hiervon ist es Aufgabe der vorliegenden Erfindung eine verbesserte optische Messeinrichtung zur Ermittlung der dreidimensionalen Form eines Objektes sowie ein verbessertes Verfahren hierzu zu schaffen, die keinen Produkttransport voraussetzt, der so kontrolliert abläuft, dass aus dem Transportmedium selbst die benötigten Weginformationen abgeleitet werden können.

Die Aufgabe wird mit der optischen Messeinrichtung mit den Merkmalen des Anspruchs 1 sowie durch das Verfahren mit den Merkmalen des Anspruchs 14 gelöst. Vorteilhafte Ausführungsformen sind in den Unteransprüchen beschrieben.

Es wird vorgeschlagen, dass die optische Messeinrichtung zur Erfassung von Bildern der sich bei der Bewegung des Objektes erfassten Oberfläche des Objektes, zur Bestimmung einer Verschiebung von Merkmalen in den in einem Zeitintervall von der Objektoberfläche erfassten Bildern und zur Ermittlung einer Verschiebung des Objektes in dem Zeitintervall aus der jeweils bestimmten Verschiebung der Merkmale in den Bildern der Objektoberfläche und von mindestens einem Höhenprofil des Objektes abgeleiteten jeweiligen Abständen und Maßstäben für die von der Objektoberfläche erfassten Bilder eingerichtet ist.

Dazu kann aus den Querschnittsprofilen für die Objektoberflächen des Objektes von denen Bilder zur Vorschubermittlung erfasst werden, der jeweilige Abstand einer jeden als Bild aufgenommenen Oberflächenregion ermittelt und als Abstandsprofil für die erfasste Oberflächenregion hinterlegt werden. Ist die Messeinrichtung so gestaltet, dass die jeweils aufgezeichnete Oberflächenregion mittig von der Scanlinie gekreuzt wird, ist der Abstand dieser Region besonders einfach aus dem Höhenprofil bestimmbar.

Es wird erfindungsgemäß ausgenutzt, dass eine Kombination der Folge von Tiefeninformationen aus den Höhenprofilen mit einer Folge von 2D-Bildsensorinformationen der Objektoberfläche zu einer jeweils bekannten Objektbewegung zwischen den Höhenprofilen führt, weil die bei variierenden Abständen fehlende Abstandsinformation der Objektregionen der aufgenommen 2D-Bilder aus den Höhenprofilen des Lichtschnittsensors abgeleitet werden kann.

Damit kann in einfachen Fällen einfach eine abstandsabhängige Anpassung der Umrechnungsfaktoren für die Pixelverschiebung in den aufgenommenen Bildern im Bildraum der Objektoberfläche in die tatsächliche Objektverschiebung des Objektes im Objektraum erfolgen.

Dies hat den Vorteil, dass der tatsächliche Verschiebeweg des Objektes im Bereich des Lichtschnittsensors detektierbar ist, ohne dass eine Verfälschung durch Schlupf oder Ähnliches erfolgt, bzw. dass auch einfache unkontrolliertere Transportmedien wie z.B. Rutschen und Rollenbänder als Messstrecke geeignet sind.

Die optische Messeinrichtung kann eine Datenverarbeitungseinheit haben, die als Vorschuberfassungseinheit zur Auswertung von Bildausschnitten der mit dem Lichtschnittsensor erfassten Bilder des Objektes durch Bestimmung einer Verschiebung von Merkmalen in den Bildausschnitten eingerichtet ist.

Die Vorschuberfassungseinheit kann mindestens einen 2D-Bildsensor haben, derjeweils zur Erfassung von Bildern der sich bei der Bewegung des Objektes erfassten Oberfläche des Objektes eingerichtet ist.

Die optische Messeinrichtung kann zur Anpassung der Einstellung eines Objektivs des 2D-Bildsensors auf sich quasistatisch verändernde Abstandsbereiche zwischen dem Objektiv und dem Objekt eingerichtet sein. Das Objektiv und/oder die Beleuchtung kann zur Anpassung auf quasistatisch andere Abstandsbereiche (z.B. verschieden hohe Produkte bei vergleichbarer Oberflächenrauhigkeit und Oberflächenstruktur) beispielsweise automatisch verstellt werden.

Die Vorschuberfassungseinheit kann mehrere 2D-Bildsensoren haben, die jeweils zur Erfassung von Bildern der sich bei der Bewegung des Objektes erfassten Oberfläche des Objektes eingerichtet sind. Die mehreren 2D-Bildsensoren erfassen voneinander unterschiedliche Oberflächenbereiche des Objektes. Dabei können sich die Objektbereiche sowohl durch eine verschiedenen Position in der Höhe als auch in der Breite unterscheiden. So können 2D-Bildsensoren mit demselben Fokus auf vergleichbar hohe Regionen der Objektoberfläche ausgerichtet sein, die in derselben Höhenebene räumlich versetzt (ggf. überlappend) zueinander sind. Denkbar ist aber auch, dass 2D-Bildsensoren einen unterschiedlichen Fokus voneinander aufweisen, aber auf dieselbe Objektregion ausgerichtet sind, so dass die 2D-Bildsensoren in Bezug auf den Abstand zwischen Objektiv und jeweils fokussierter Bildebene unterschiedliche Oberflächenbereiche in der Höhe erfassen. Die optische Messeinrichtung ist zur Auswahl jeweils einer der mehreren Oberflächenbereiche für die Ermittlung der Verschiebung des Objektes angepasst an eine Höheninformation, die aus dem mit dem Linienschnittsensor erfassten Höhensprofil abgeleitet ist, eingerichtet.

Wenn das Objekt mehr in der Breite variiert, reicht eventuell zur Bestimmung der Verschiebung zwischen zwei Höhenprofilen eine fest konfigurierte 2D-Bildsensoreinheit (Objektiv und Beleuchtung) aus. Unter Umständen werden in der Breite mehr als eine Objektregion benötigt, für die Bilder aufgezeichnet werden, um sicherzustellen, dass immer eine Bildregion auch auf der Objektoberfläche verfügbar ist. Aus dem Höhenprofil kann dann die geeignete Bildregion bzw. der zugeordnete 2D-Bildsensor ausgewählt werden, damit die betreffende Verschiebeinformation abgeleitet werden kann.

Der mindestens eine 2D-Bildsensor kann für eine andere Wellenlänge sensitiv sein, als die Wellenlänge des Lichtschnittsensors.

Vorteilhaft ist es, wenn das Licht für die 2D-Bildsensoren eine andere Frequenz hat als die Lichtlinie des Lichtschnittsensors, damit keine gegenseitige Beeinflussung stattfindet. Ebenso kann es von Vorteil sein, wenn zu verschiedenen Abständen für die 2D-Bildsensoren die zugeordneten Beleuchtungen ebenfalls unterschiedliche Lichtfrequenzen benutzen, wenn keine global für alle Abstandsbereiche geeignete Ausleuchtung gefunden werden kann.

Die Vorschuberfassungseinheit kann weiterhin eine zusätzliche Beleuchtungseinheit für die Beleuchtung der erfassten Oberfläche des Objektes haben.

In komplexeren Fällen ist es vorteilhaft, wenn aus der Abstandinformation des Lichtschnittsensors eine Anpassung der Beleuchtung und ggf. des Objektivs des 2D-Bildsensors folgt.

Die optische Messeinrichtung kann zur Anpassung der Beleuchtung des von der Oberfläche des Objektes erfassten Bildbereichs auf sich quasistatisch verändernde Abstandsbereiche zwischen dem Objektiv und dem Objekt eingerichtet sein.

Wenn die Objektoberfläche im Grundformat variiert, aber die eigentliche Höhenvariation, und damit der Abstand der Objektregion zum 2D-Bildsensor begrenzt ist, reicht eine quasistatische Anpassung des Objektivs und der Beleuchtung aus. Während der Messung muss somit keine fortgesetzte, dynamische Anpassung erfolgen.

Die optische Messeinrichtung kann zur dynamischen Anpassung der Einstellung des Objektivs und der Beleuchtung für sich dynamisch über das Objekt wechselnde Abstandsbereiche eingerichtet sein. Für sich dynamisch ändernde Abstandsbereiche kann somit eine fortlaufende automatische Anpassung der Bildgröße und/oder Objektbereichsausleuchtung des betreffenden 2D-Bildsensors erfolgen.

Die optische Messeinrichtung kann zur Bestimmung einer Verschiebung von Merkmalen in den von der Objektoberfläche erfassten Bildern in einem Bildbereich eingerichtet sein, den die linienförmige Markierung schneidet. Dabei kann die Mitte - in Transportrichtung gesehen - der Oberflächenregion des 2D-Bildsensors für den betreffenden Abstand dieser Objektfläche genau auf einer Höhenprofillinie des Lichtschnittsensors liegen. Dadurch repräsentiert der Abstand, der sich aus diesem Höhenprofil ergibt, schon näherungsweise den mittleren Abstand der Objektregion zu dem betreffenden 2D-Bildsensor. Dies kann durch eine entsprechende Gestaltung und Anordnung der Optik des 2D-Bildsensors und der Scanoptik des Lichtschnittsensors sichergestellt werden.

Die optische Messeinrichtung kann zur Abstimmung der Scanfrequenz des Lichtschnittsensors und der Bildfolgefrequenz, die zur Ermittlung einer Verschiebung des Objektes aus zeitlich nacheinander erfassten Bildern genutzt wird, aufeinander eingerichtet sein. Die Abstimmung kann z.B. je nach den Erfordernissen der Scanauflösung, der Scangeschwindigkeit und der Glattheit der Oberflächenverläufe erfolgen.

Da zwischen zwei Bildern nur eine geringe Abstandänderung liegen sollte, was für die Güte der Korrelationsanalyse vorteilhaft ist, sollten die Bilder mit hinreichender Bildfolgefrequenz aufgezeichnet werden. Insbesondere wenn die Objektoberfläche nur kleine Strukturelemente aufweist, ist eine hinreichend vergrößerte Darstellung des Objektbereiches vorteilhaft. Damit auch in diesen Fällen eine Bewegung bis zu einigen m/s möglich ist, muss die Aufnahmefrequenz hinreichend groß gewählt sein.

Für beispielsweise eine Objektgeschwindigkeit von 1 m/s und eine Bildregion von 30 x 30 Pixeln und dem kleinsten Strukturelement von 1 mm, sollte dieses mit wenigstens zwei Pixeln abgetastet werden. Daraus ergibt sich eine Objektregion von 15 mm. Wird nun für eine gute Korrelation angenommen, dass zwischen zwei aufeinanderfolgenden Bildern höchstens eine Verschiebung von 7,5 mm erfolgen sollte, so sollte alle 7,5 Millisekunden eine Aufnahme gemacht werden, d.h. die Bildfolgefrequenz sollte mindestens 134 Hz betragen.

Andererseits macht es keinen Sinn, die Frequenz generell extrem hoch zu wählen, weil dann zwischen zwei Aufnahmen u.U. jeweils noch keine Verschiebung gemessen werden würde.

Die Parameter Messfrequenz, Objektbereichsgröße, Strukturelementgröße, maximale Geschwindigkeit und Beschleunigung und kleinste auflösbare Verschiebung sollten aufeinander abgestimmt sein.

Neben dem Problem der Maßstabsänderung bei nicht konstantem Objektabstand führen auch diese Einflussparameter dazu, dass man nicht davon ausgehen kann, dass eine scharfe Abbildung über den ganzen Höhenbereich ausreichend ist. Nimmt man als Beispiel ein Objekt mit glatter, wenig strukturierter Oberfläche, so wird man allein um eine Korrelation zwischen 2 aufeinanderfolgende, sich überlappende Aufnahmen zu bekommen, eine relativ stark Vergrößerung und kleine Bildausschnitte benutzen müssen, damit kleine Strukturen im ganzen Bildbereich scharf sichtbar werden und damit eine Korrelation der Bildinhalte überhaupt funktioniert. Ein Objektiv mit großer Tiefenschärfe würde keineswegs zum Ziel führen. Außerdem muss die Beleuchtung einerseits kontrastreich sein, aber andererseits auch sehr gleichmäßig, da Beleuchtungsschwankungen und starke Schattenbildungsschwankungen zwischen zwei Bildern für die Korrelationsanalyse schädlich wären. Die Faktoren korrelationsgeeignete Strukturen, Schärfe der Abbildung, Gleichmäßigkeit der Beleuchtung und keine extremen Schattenwürfe lassen sich nur über einen gewissen Arbeitsbereich, der auch von den Oberflächeneigenschaften des Objektes abhängig ist, hinreichend gut einstellen.

Es sind also auch Justierungen der Objektive des 2D-Bildsensors und der zugeordneten Beleuchtung vorteilhaft. Alternativ kann aus einer Vielzahl von 2D-Bildsensoren und/oder 2D-Bildsensorregionen mit abstandsabhängig eingerichteten Objektiven und Beleuchtungen passend ausgewählt werden.

Es kann der Fall betrachtet werden, bei dem nur eine quasistatische Anpassung erforderlich ist, weil die Änderungen der Höhenverhältnisse entweder nur im Grundformat der Messobjekte bestehen. Dann reicht es vor Messbeginn aus, jeweils die Objektive und die Beleuchtung automatisch auf einen anderen Arbeitsbereich einzustellen, wobei die dann noch verbleibende Variation wieder gering genug ist, dass eine Korrektur der Pixelverschiebung auf die wahre Objektverschiebung durch eine abstandsabhängige Skalierung ausreicht, oder das Produkt verändert sich so langsam im Vergleich zu der sonstigen Objektgeschwindigkeit, dass eine kontinuierlich Anpassung ohne zeitliche Probleme möglich ist.

Falls das Messobjekt eine stärkere Höhendynamik besitzt, sind Techniken vorzugsweise anzuwenden, die eine hinreichend schnelle Objektivanpassung und Beleuchtungsanpassung ermöglichen.

Die Beleuchtung kann im Fall der Verwendung von LEDs in der Regel leichter angepasst werden, da einfacher auf andere oder zusätzliche Arrayelemente umgeschaltet werden kann.

Auch kann eine Winkelveränderung der Beleuchtung mit relativ kleinen Auslenkungen, die schnell umgesetzt werden können, bewirkt werden.

Bei den Objektiven können automatisch verstellbare Objektive, z.B. auch Flüssigkeitslinsen eingesetzt werden, damit man im Bereich von einigen Millisekunden Anpassungen vornehmen kann.

Falls die Anpassung während der Bildaufnahme nicht schnell genug funktioniert, könnten z.B. mindestens zwei 2D-Bildsensoreinheiten mit verstellbaren Objektiven und Beleuchtungen vorgesehen werden, wobei die eine misst, während die andere auf die neuen Abstandsverhältnisse eingestellt wird und dann nach dem Einstellvorgang jeweils auf die andere Einheit umschaltet. Hierbei wird vorausgesetzt, dass der Abstandverlauf bei vielen Objekten relativ kontinuierlich - d.h. ohne sprunghafte Veränderung in der jeweiligen Tendenz - verläuft
Denkbar ist auch eine Kaskade von 2D-Bildsensoreinheiten, die für verschiedene Abstandsregionen der von der Vorschubmesseinrichtung erfassten Oberflächenbereiche voreingestellt sind, was auch wirtschaftlich machbar ist, wenn preiswerte PC-Mauschips zum Einsatz kommen.

Durch die Abstandsinformation, die vom Lichtschnittsensor erhalten wird, kann dann während des Messvorganges auf das Ergebnis desjenigen 2D-Bildsensors zugegriffen werden, der am besten zu dem jeweils ermittelten Abstand für jeden einzelnen der mehreren 2D-Bildsensoren passt.

Vorteilhaft ist die Verwendung einer an sich zum Einsatz in einer optischen Maus ausgebildeten integrierten Schaltung mit einem zur Erfassung einer Bildpixelmatrix eingerichteten Bildsensor und mit einer Bildauswerteeinheit zur Erfassung der Verschiebung von Merkmalen anhand des Bildvergleichs von zeitlich nacheinander erfassten Bildpixelmatrizen. Die optische Messeinrichtung kann dabei zur Skalierung der Verschiebung anhand des aus dem Abstandsprofil abgeleiteten Maßstabsprofil und zur Bestimmung des Vorschubweges des Objektes aus der skalierten Verschiebung eingerichtet sein.

Als Bildsensoren könnten z.B. mehrere Einheiten - mit angepassten Beleuchtungen und Objektiven - verwendet werden, wie sie beispielsweise in Mäusen für Personal Computer (PC) benutzt werden.

Es könnte in einigen Fällen aber auch eine CMOS-Kamera geeignet sein, die sowieso zur Information von frequenzselektiven Informationen - wie z.B. Objektfarbe - vorgesehen ist, z.B. um besondere Merkmale zu finden wie Fehlstellen auf der Objektoberfläche, wobei geeignete Teilregionen dieses Aufnahmesensors benutzt werden, um aus den vorgenannten Korrelationsanalysen eine Pixelverschiebung in x- und y-Richtung zu gewinnen, die dann aufgrund der Abstandinformation aus dem Lichtschnittsensor passend skaliert zu einer Weginformation in x und y umgerechnet wird.

Die optische Einrichtung kann einen Datenspeicher mit in dem Datenspeicher hinterlegten abstandsanhängigen Korrelationsparametern und Skalierungsparametern haben und zur Umrechnung der bestimmten Verschiebung der Merkmale in den Bildern der Objektoberfläche mit aus dem Datenspeicher ausgelesenen Korrelationsparametern und/oder Skalierungsparametern in einen Verschiebeweg des Objektes eingerichtet sein.

Die Aufgabe wird zudem mit einem Verfahren zur Ermittlung der dreidimensionalen Form eines Objektes mit einer solchen optischen Messeinrichtung gelöst. Hierbei sind die Schritte vorgesehen:
- Bestimmen eines Höhenprofils eines unter dem Lichtschnittsensor hindurch beförderten Objektes mit dem Lichtschnittsensor anhand einer auf das Objekt projizierten linienförmigen Markierung,
- Erfassen von Bildern der Objektoberfläche,
- Bestimmen einer Verschiebung von Merkmalen in den von der Objektoberfläche erfassten Bildern und
- Ermittlung einer Verschiebung des Objektes aus der bestimmten Verschiebung der Merkmale in den Bildern der Objektoberfläche und aus von dem Höhensprofil des Objektes abgeleiteten jeweiligen Abständen und Maßstäben der von der Objektoberfläche erfassten Bilder.

In dem Verfahren kann ein Anpassen einer Optik und/oder Beleuchtungseinheit der optischen Messeinrichtung in Abhängigkeit von dem mit dem Lichtschnittsensor jeweils abgeleiteten Höhenprofil zu den erfassten Bereichen der Objektoberfläche des Objektes vorgesehen sein.

Vorteilhaft erfolgt ein Auswählen eines von mehreren 2D-Bildsensoren und/oder ein Ansteuern einer Beleuchtungseinheit der optischen Messeinrichtung zur Beleuchtung der erfassten Objektoberfläche in Abhängigkeit von den mit dem Lichtschnittsensor aus den Höhenprofilen des Objektes abgeleiteten Abstandsprofilen für die 2D-Bildregionen mit ihren zugeordneten Beleuchtungselementen.

Denkbar ist, dass das Prinzip der Kombination von Höheninformation, 2D-Bildinformation und Pixelverschiebung anhand der Korrelationsanalyse durch eine kompakte Hardwareeinheit realisiert wird, die eine berührungslose Abstandmessung (Lichtlaufzeit, Ultraschall etc.) benutzt, um in Echtzeit die Abbildungsoptik anzupassen.

Die Beleuchtung kann global realisiert werden, z.B. als telezentrische Beleuchtung, deren erwartete Rückstrahlintensität abstandsabhängig angepasst wird und als Parameter in die Korrelationsberechnung einfließt, so dass ein permanent abstandkorrigierter Verschiebeweg in x und y von dieser erweiterten Hardware ausgegeben wird.

Denkbar ist auch ein passend angesteuertes LED-Array, das für die Hardware von extern bereitgestellt werden muss, wobei das Array so gestaltet wird, dass in jedem Abstand eine für die Korrelationsanalyse gut geeignete Ausleuchtung entsteht. Dabei wird allerdings nur innerhalb gewisser Grenzen eine Anpassung an den Objektverlauf vorgenommen werden können. Abrupte Löcher oder Erhöhungen könnten dann über gewisse Filtermechanismen sinnvoll verarbeitet werden.

Denkbar ist es, über einen gewissen Verlauf des Objektes in Scanrichtung eine Art von Mittelung durchzuführen. Damit können auf einfache Weise nicht plausible Abstandsmaße und nicht plausible Verschiebmaße einer Einzelmessung sinnvoll eliminiert werden.

Eine spezielle Variante könnte auch die Tiefenbilder zweier Lichtschnittsensoren, die einen bekannten fixen Abstand D zueinander in Scanrichtung haben und mit bekannter gleicher Scanfrequenz messen, in die Korrelationsanalyse geben. Hierbei würde die Anzahl an Höhenprofilen, bis es zu einem korrelierten Überlappungsbereich kommt, das Maß für die Geschwindigkeit sein, die das Objekt zur Überwindung der Strecke D gebraucht hat und damit das Maß für die Strecke, die zwischen zwei Höhenprofilen liegt.

Die Erfindung wird nachfolgend anhand eines Ausführungsbeispiels mit den beigefügten Zeichnungen näher erläutert. Es zeigen:
- Figur 1: - Skizze in Seitenansicht einer optischen Messeinrichtung an einem Transportband für unter einem Lichtschnittsensor hindurch transportierte Objekte;
- Figur 2: - Skizze in Draufsicht einer optischen Messeinrichtung an einem Transportband für unter einem Lichtschnittsensor hindurch transportierte Objekte;

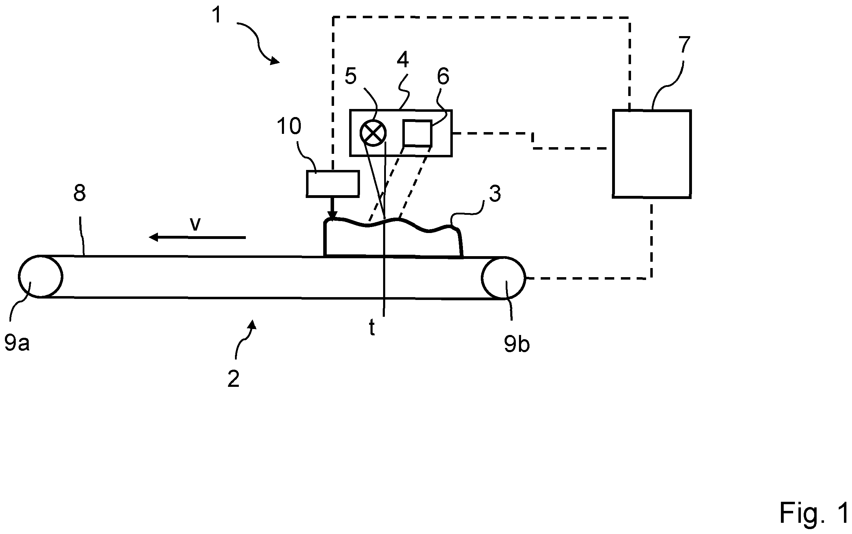

Figur 1 zeigt eine Skizze in Seitenansicht einer optischen Messeinrichtung 1, die an einem Transportband 2 angeordnet ist. Die optische Messeinrichtung 1 ist auf die Oberseite des Transportbandes 2 ausgerichtet, auf der Objekte 3 unter einem Lichtschnittsensor 4 in eine Vorschubrichtung V befördert werden.

Der Lichtschnittsensor 4 hat eine Beleuchtungseinheit 5, die zur Projektion einer linienförmigen Markierung auf die dem Lichtschnittsensor 4 zugewandten Oberfläche des Objektes 3 ausgebildet ist. Weiterhin hat der Lichtschnittsensor 4 mindestens eine Bildaufnahmeeinheit 6 zur Erfassung von zumindest einem Teil der auf das Objekt projizierten linienförmigen Markierung.

Der Lichtschnittsensor 4 oder eine daran angeschlossene Datenverarbeitungseinheit 7 ist beispielsweise durch geeignete Programmierung mit einem zur Ausführung auf der Datenverarbeitungseinrichtung 7 ausgebildeten Computerprogramm eingerichtet, um anhand der aufgenommenen Bilder mit der linienförmigen Markierung auf dem Objekt 3 die auf die Oberseite 8 des Transportbandes 2 bezogene jeweilige Höhe des Objektes 3 in einer Bildspalte zu bestimmen, was dann zu jedem Scanbild ein Öhenprofil bzw. ein Querschnittsprofil von dem Objekt 3 liefert. Aus diesem Höhenprofil ergeben sich auch Merkmale wie Objektbreite, Objekthöhe und Querschnitt. Wenn man an einer bestimmten Stelle quer zur Transportrichtung die Objekthöhe ermittelt, ergibt das über die Summe von Höhenprofilen, d.h. über die Zeit bzw. über den Ort entlang der Länge des Objektes 3, ein Abstandsprofil an dieser Stelle. Auf diese Weise kann auch für Objektbereiche auf dem Objekt 3, die z.B. von der Vorschubmesseinheit erfasst werden, deren jeweiliger Höhenwert bestimmt werden, woraus auch bestimmt werden kann mit welchem Abbildungsmaßstab zu rechnen ist, um von einer Verschiebung im Bild zu einer Verschiebung der dazugehörigen Objektoberfläche zu kommen.

Für die Vorschubbewegung wird das Förderband 2 an zwei entfernt voneinander angeordneten Umlenkrollen 9a, 9b geführt und z.B. mittels der Datenverarbeitungseinheit 7 angesteuert. Zur Ermittlung des Abstandsprofils während der Vorschubbewegung V ist es nun erwünscht, den Vorschub des Objektes 3 über die Zeit t möglichst präzise zu ermitteln.

Hierzu ist eine Vorschuberfassungseinheit vorhanden, die in dem Ausführungsbeispiel mindestens einen 2D-Bildsensor 10 zur Erfassung von Bildern der Oberfläche des sich unter dem Lichtschnittsensor 4 hindurch bewegenden Objektes 3 eingerichtet ist. Hierzu nimmt der 2D-Bildsensor 10 Bilder von Ausschnitten der Oberfläche des Objektes 3 auf. Der Verschiebeweg des Objektes 3 wird aus einem Bildvergleich von Merkmalen zweier nacheinander aufgenommener Bildern der Oberfläche des Objektes 3 bestimmt. Hierbei wird die Verschiebung gleicher Merkmale in dem Paar von Bildern erfasst. Die Vorschubgeschwindigkeit kann dann unter Berücksichtigung der Zeitdifferenz der Aufnahme der aufeinanderfolgenden Bilder ermittelt werden, d.h. durch die zeitliche Ableitung der Verschiebung.

Die optische Messeinrichtung 1 kann eine Datenverarbeitungseinheit 7 haben, die den Bildvergleich und die Ermittlung des Verschiebeweges und ggf. der Vorschubgeschwindigkeit aus dem Ergebnis des Bildvergleichs bestimmt. Hierzu können die Bilder mindestens eines 2D-Bildsensors 10 genutzt werden oder Bilder, die von der Bildaufnahmeeinheit 6 des Lichtschnittsensors 4 aufgenommen wurden.

Denkbar ist, dass Bilder eines 2D-Bildsensors 10 an die Datenverarbeitungseinheit 7 übertragen werden. Die Ermittlung des Verschiebeweges bzw. der Vorschubgeschwindigkeit aus den aufeinanderfolgenden Bildern erfolgt dann durch ein von der Datenverarbeitungseinheit 7 ausgeführtes Computerprogramm.

Die Datenverarbeitungseinheit 7 kann eingerichtet sein, um aus den mit dem Lichtschnittsensor 4 erfassten Höheninformationen zu bestimmten Zeitpunkten t jeweils einen Maßstab abzuleiten, der zur Bestimmung der Verschiebung des Objektes 3 aus der Verschiebung von Merkmalen der Bilder der Objektoberfläche herangezogen wird. Der Maßstab kann hierzu beispielsweise ein Skalierungsfaktor sein, mit dem jeweils die Verschiebung eines Merkmals im Bild multipliziert wird. Der vom Abstand abhängige Skalierungsmaßstab transformiert die ermittelte Verschiebung in dem Bildraum in die tatsächliche Verschiebung des Objektes 3 in dem Objektraum.

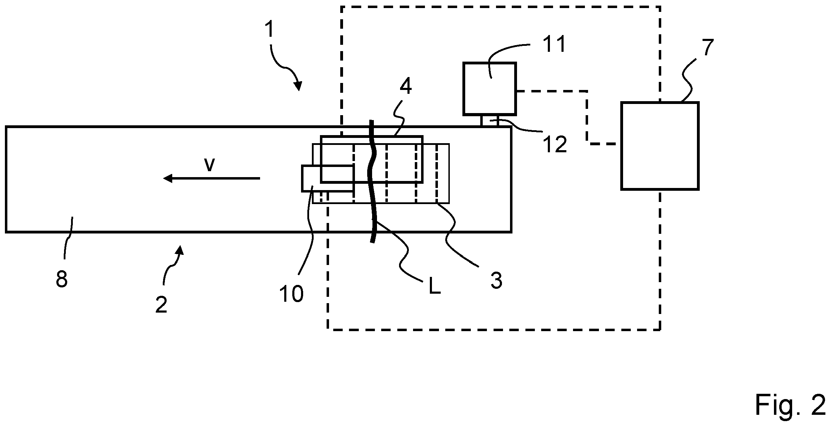

Figur 2 zeigt eine Draufsicht auf die optische Messeinrichtung 1 und das Transportband 2, auf dem Objekte 3 unter dem Lichtschnittsensor 4 hindurchtransportiert werden. Erkennbar ist, dass auf die Oberfläche des Objektes 3 eine linienförmige Markierung L aufprojiziert wird. Aus der Verformung der linienförmigen Markierung L lässt sich das Höhensprofil bestimmen.

In dieser Skizze ist der Vorschubsensor 10 auf die Oberfläche des Objektes 3 ausgerichtet.

Erkennbar ist auch, dass das Transportband 2 mittels eines Motors 11 angetrieben wird, der über eine Welle 12 mit einer Umlenkrolle 9b verbunden ist. Der Motor 11 wird durch die Datenverarbeitungseinheit 7 angesteuert, welche nicht nur auswertet - sondern auch Steuerfunktionen übernimmt. Denkbar ist auch, dass sich das Objekt 3 auf einem Rollenband mit oder ohne Antrieb bewegt.

Mit den gestrichelten Linien auf dem Objekt 3 sind die Berge und Täler des Objektes 3, d.h. ein bestimmtes Abstandsprofil, angedeutet.

Aus der Form der aktuellen linienförmigen Markierung L kann mittels entsprechender Kalibrierung unmittelbar auf die Objekthöhe eines Profilpunktes im aktuellen Schnittbild geschlossen werden. Wenn sich das Objekt 3 mit räumlich und zeitlich bekanntem Vorschub unter der linienförmigen Markierung L entlang bewegt, so wird eine Abfolge von Höhenprofilen gewonnen, aus denen die zum Lichtschnittsensor 4 gewandte Oberfläche des Objektes 3 rekonstruiert werden kann.

Der Vorschub V wird mit einer optischen Wegmessung unter Nutzung eines bildgebenden 2D-Bildsensors 10 ermittelt, der mit einer ausreichenden Bildfolgefrequenz Aufnahmen der sich mit Vorschubgeschwindigkeit bewegenden Oberfläche des Objektes 3 erstellt, wobei mindestens zwei aufeinanderfolgende Bilder miteinander verglichen und aus der Verschiebung der Bildinformationen der aktuelle Verschiebewert bestimmt wird.

Hierzu ist die Datenverarbeitungseinheit 7 beispielsweise ausgebildet, um die bei der Bewegung der Oberfläche des Objektes 3 aufgenommenen Bilder, welche jeweils überlappende Informationen enthalten, mittels einer Korrelationsanalyse der aufeinanderfolgenden Bildinhalte auszuwerten. Wenn die Bildinhalte dabei relativ zueinander verschoben werden, ergibt sich die Größe der Korrelation, wenn die Bildinhalte bestmöglich übereinstimmen. Der Verschiebevektor der Bildinhalte für diesen Zustand mit bestmöglicher Korrelation entspricht dann dem Verschiebeweg.

Der 2D-Bildsensor 10 kann in einem handelsüblichen kompakten Sensor integriert sein. Hierzu sind integrierte Schaltungen erhältlich, die in optischen Mäusen für Computer verwendet werden und die Optik mit Bildaufnahmeeinheit und eine Auswerteeinheit enthalten.

Denkbar ist, dass die Vorschuberfassungseinheit mit dem 2D-Bildsensor 10 zusätzlich eine Beleuchtungseinheit (Lichtquelle) hat, welche die aufzunehmende Oberfläche des Objektes 3 geeignet und möglichst gleichmäßig ausleuchtet.

Vorteilhaft ist es auch, wenn der 2D-Bildsensor 10 eine Optik enthält, die passend zu den Abstandsverhältnissen und der Oberflächenbeschaffenheit (Material, Rauigkeit, Strukturiertheit etc.) ein flaches, für die Korrelationsanalyse bestmöglich verwendbares Bild erzeugt.

Der 2D-Bildsensor 10 ist vorzugsweise auf die mittlere Oberflächeneigenschaft des Objektes 3 eingerichtet. Hierzu kann sowohl die Optik als auch eine optionale Beleuchtung der Vorschuberfassungseinheit fest eingestellt oder geregelt werden. Vorteilhaft ist dabei, wenn die Optik und die Beleuchtung des 2D-Bildsensors 10 auf den mittleren Abstand des 2D-Bildsensors 10 zur Oberfläche des Objektes 3 fest oder vorzugsweise dynamisch in Abhängigkeit von den sich variierenden Verhältnissen von z.B. Abstand, Licht, Oberflächenstruktur etc. abgestimmt wird.

Die Messfrequenz des 2D-Bildsensors 10 sollte mindestens so hoch sein, dass für zwei aufeinanderfolgende Bilder keine große Tiefenänderung erfolgt.

Denkbar ist, dass die Optik und Beleuchtung des 2D-Bildsensors 10 auf die Oberflächenbeschaffenheit und die Entfernung des 2D-Bildsensors 10 zum Untergrund variabel anpassbar ist. Für den Fall, dass zwischen verschiedenen Anwendungen Unterschiede in de mittleren Abständen und in der mittleren Oberflächenbeschaffenheit bestehen, d.h. der mittlere Abstand des 2D-Bildsensors 10 zur Oberfläche des Objektes 3 variiert oder die Struktur der Oberfläche feiner oder gröber ist, kann die Wegmessung auf die anderen Verhältnisse angepasst werden. Auf diese Weise wird sichergestellt, dass jeweils ein flaches strukturiertes Bild von dem 2D-Bildsensor 10 aufgenommen werden kann, welches zur Korrelationsanalyse bestmöglich geeignet ist.

Die Messfrequenz des 2D-Bildsensors 10 ist vorzugsweise variabel anpassbar. Sie kann beispielsweise durch die Datenverarbeitungseinheit 7 mit einem die Vorschubgeschwindigkeit des Transportbandes 2 festlegenden Steuersignals synchronisiert sein.

Denkbar ist, dass die Bildaufnahmeeinheit 6 des Lichtschnittsensors 4 gleichzeitig als Bildaufnahmeeinheit für die Vorschuberfassungseinheit genutzt wird.

Die optische Messeinrichtung 1 kann derart eingerichtet sein, dass bei starken Höhenveränderungen eine Anpassung der Optik und der Beleuchtung aufgrund von Tiefendaten erfolgt, die von dem 2D-Bildsensor 10 oder dem Lichtschnittsensor 4 gemessen wurden. Für die Ermittlung des Vorschubweges ist es ausreichend, wenn stückweise konstante Oberflächenstrukturen und Abstände zur Oberfläche des Objektes 3 vorliegen. Über die gesamte Messstrecke kann die Wegmessung dadurch mit ausreichender Genauigkeit durchgeführt werden, wenn eine Anpassung in Abhängigkeit von den Tiefendaten dann erfolgt, wenn die Abständeder aufgenommenen Bilder zu den Objektflächen sich so stark ändert, dass eine Anpassung des Abbildungsmaßstabes erforderlich wird.

Die Anpassung erfolgt bevorzugt automatisch und kann durch die Datenverarbeitungseinheit 7 vorgenommen werden.

Die mit dem Lichtschnittsensor 4 ermittelten Höheninformationen bzw. Abstandsdaten können genutzt werden, um die Ergebnisdaten der mit der Vorschubermittlungseinheit durchgeführten Wegmessung rechnerisch zu korrelieren. Damit kann beispielsweise ein Skalierungsfaktor aus den mit dem Lichtschnittsensor 4 ermittelten Höheninformationen bestimmt werden, welcher in den mit der Vorschubermittlungseinheit 10 aus der Verschiebung von Merkmalen der mit Bildern erfassten Objektoberfläche eines Objektes 3 ermittelten Vorschubweg des Objektes 3 einfließt.

Das Messverfahren kann auch derart erfolgen, dass bei unveränderter Oberflächenstruktur eine reine Abstandsänderung und die damit verbundene geänderte Skalierung des von dem 2D-Bildsensor 10 aufgenommenen Bildes durch die Lichtschnittsensor 4 bekannte Entfernung des Aufnahmebereichs der Bildaufnahmeeinheit 6 mittels Software im Nachhinein korrigiert wird. Ein großer Abstand bedeutet bei derselben Pixelverschiebung aus der Korrelationsanalyse eine größere Differenzstrecke zwischen den beiden aufeinanderfolgenden Bildaufnahmen. Wenn im ersten Berechnungsgang mit einem konstanten Abstand und so mit einer konstanten Wegskalierung gerechnet wird, können die Daten anhand der vorgenommenen Indizierung erneut berechnet und die richtigen Abstände und damit die richtigen Skalierungsfaktoren zur Korrektur der vorher ermittelten Wegdifferenzen verwendet werden. Damit ergibt sich nachträglich trotz wechselnder Distanz des 2D-Bildsensors 10 zur Oberfläche die wahre Wegstrecke, d.h. der Vorschubweg.

Korrekturfaktoren, die aus der Messung des mindestens einen Lichtschnittsensors 4 abgeleitet werden können, lassen sich direkt an die Datenverarbeitungseinheit 7 übergeben oder von dieser bestimmen, die dann unmittelbar korrigierte Positionsverschiebungen ausgibt.

Für den Fall, dass nur eine einfache Skalierungsänderung zu beachten ist, kann der aktuelle Abstandswert oder die Abstandsänderung an eine erweiterte Korrelationshardware fortlaufend übermittelt werden, welche die anzuwendende Skalierungsänderung fortlaufend berücksichtigt und in Echtzeit einen korrigierten Verschiebewert bestimmt und ausgibt.

## Patentansprüche

1. Optische Messeinrichtung (1) zur Ermittlung der dreidimensionalen Form eines Objektes (3), die mindestens einen Lichtschnittsensor (4) aufweist, der eine zur Projektion einer linienförmigen Markierung (L) auf das Objekt (3) ausgebildete Beleuchtungseinheit (5) und mindestens eine Bildaufnahmeeinheit (6) zur Erfassung der auf das Objekt (3) projizierten linienförmigen Markierung (L) hat, und eine Vorschuberfassungseinheit aufweist, die zur Erfassung des Vorschubweges des unter dem Lichtschnittsensor (4) hindurch bewegten Objektes (3) über die Zeit (t) ausgebildet ist, wobei die optische Messeinrichtung (1) zur Bestimmung von Höhenprofilen des Objektes aus der linienförmigen Markierung (L) und ) zur Erfassung von Bildern der sich bei der Bewegung des Objektes (3) erfassten Oberfläche eingerichtet ist,
**dadurch gekennzeichnet, dass**
die optische Messeinrichtung (1) zur Bestimmung einer Verschiebung von Merkmalen in den in einem Zeitintervall von der Objektoberfläche erfassten Bildern und zur Ermittlung einer Verschiebung des Objektes (3) in dem Zeitintervall aus der jeweils bestimmten Verschiebung der Merkmale in den Bildern der Objektoberfläche und aus von mindestens einem Höhenprofil des Objektes (3) abgeleiteten jeweiligen Abständen und Maßstäben für die von der Objektoberfläche erfassten Bilder eingerichtet ist.

2. Optische Messeinrichtung (1) nach Anspruch 1, **dadurch gekennzeichnet, dass** die optische Messeinrichtung (1) eine Datenverarbeitungseinheit (7) hat, die als Vorschuberfassungseinheit zur Auswertung von Bildausschnitten der mit dem Lichtschnittsensor (4) erfassten Bilder des Objektes (3) durch Bestimmung einer Verschiebung von Merkmalen in den Bildausschnitten eingerichtet ist.

3. Optische Messeinrichtung (1) nach Anspruch 1, **dadurch gekennzeichnet, dass** die Vorschuberfassungseinheit einen 2D-Bildsensor (10) hat, der zur Erfassung von Bildern der sich bei der Bewegung des Objektes (3) erfassten Oberfläche des Objektes (3) eingerichtet ist.

4. Optische Messeinrichtung (1) nach Anspruch 3, **dadurch gekennzeichnet, dass** die optische Messeinrichtung (1) zur Anpassung der Einstellung eines Objektivs des 2D-Bildsensors (10) auf sich quasistatisch verändernde Abstandsbereiche zwischen dem Objektiv und den von der Vorschuberfassungseinheit verwendeten Oberflächenbereichen des Objektes (3) eingerichtet ist.

5. Optische Messeinrichtung (1) nach Anspruch 3 oder 4, **dadurch gekennzeichnet, dass** die Vorschuberfassungseinheit mehrere 2D-Bildsensoren (10) hat, die jeweils zur Erfassung von Bildern der sich bei der Bewegung des Objektes (3) erfassten Oberfläche des Objektes (3) eingerichtet sind, wobei die mehreren 2D-Bildsensoren (10) voneinander unterschiedliche Oberflächenbereiche des Objektes (3) erfassen, und wobei die optische Messeinrichtung (1) zur Auswahl jeweils einer der mehreren Oberflächenbereiche für die Ermittlung der Verschiebung des Objektes (3) auf Basis der Höheninformationen zu allen von den mehreren 2D-Bildsensoren (10) erfassten Oberflächenbereichen , die aus den mit dem Linienschnittsensor (4) erfassten Höhenprofilen abgeleitet sind, eingerichtet ist.

6. Optische Messeinrichtung (1) nach Anspruch 3, 4 oder 5 **dadurch gekennzeichnet, dass** der mindestens eine 2D-Bildsensor (10) für eine andere Wellenlänge sensitiv ist, als die Wellenlänge des Lichtschnittsensors (4).

7. Optische Messeinrichtung (1) nach einem der vorhergehenden Ansprüche, **dadurch gekennzeichnet, dass** die Vorschuberfassungseinheit weiterhin eine zusätzliche Beleuchtungseinheit für die Beleuchtung der erfassten Oberfläche des Objektes (3) hat.

8. Optische Messeinrichtung (1) nach einem der vorhergehenden Ansprüche,
**dadurch gekennzeichnet, dass** die optische Messeinrichtung (1) zur Anpassung der Beleuchtung des von der Oberfläche des Objektes (3) erfassten Bildbereichs auf sich quasistatisch verändernde Abstandsbereiche zwischen dem Objektiv und den von der Vorschuberfassungseinheit verwendeten Oberflächenbereichen des Objektes (3) eingerichtet ist.

9. Optische Messeinrichtung (1) nach Anspruch 4 und 8, **dadurch gekennzeichnet, dass** die optische Messeinrichtung (1) zur dynamischen Anpassung der Einstellung des Objektivs und der Beleuchtung für sich dynamisch über das Objekt (3) ändernde Abstandsbereiche der zur Vorschubermittlung verwendeten Oberflächenbereiche eingerichtet ist.

10. Optische Messeinrichtung (1) nach einem der vorhergehenden Ansprüche,
**dadurch gekennzeichnet, dass** die optische Messeinrichtung (1) zur Bestimmung einer Verschiebung von Merkmalen in den von der Objektoberfläche erfassten Bildern in einem Bildbereich eingerichtet ist, den die linienförmige Markierung (L) schneidet.

11. Optische Messeinrichtung (1) nach einem der vorhergehenden Ansprüche,
**dadurch gekennzeichnet, dass** die optische Messeinrichtung (1) zur Abstimmung der Scanfrequenz des Lichtschnittsensors (4) und der Bildfolgefrequenz, die zur Ermittlung einer Verschiebung des Objektes aus zeitlich nacheinander erfassten Bildern genutzt wird, aufeinander eingerichtet ist.

12. Optische Messeinrichtung (1) nach einem der vorhergehenden Ansprüche,
**dadurch gekennzeichnet, dass** die optische Messeinrichtung (1) eine zum Einsatz in einer optische Maus ausgebildete integrierte Schaltung mit einem zur Erfassung einer Bildpixelmatrix eingerichteten Bildsensor (10) und mit einer Bildauswerteeinheit zur Erfassung der Verschiebung von Merkmalen anhand des Bildvergleichs von zeitlich nacheinander erfassten Bildpixelmatrizen hat, wobei die optische Messeinrichtung (1) zur Skalierung der von der Bildauswerteeinheit jeweils erfassten Verschiebung von Merkmalen anhand des aus mindestens einem Höhenprofil jeweils abgeleiteten Maßstabs zur Bestimmung der jeweilig stattfindenden Objektverschiebung des Objektes (3) eingerichtet ist.

13. Optische Messeinrichtung (1) nach einem der vorhergehenden Ansprüche,
**dadurch gekennzeichnet, dass** die optische Einrichtung (1) einen Datenspeicher mit in dem Datenspeicher hinterlegten abstandsabhängigen Korrelationsparametern und Skalierungsparametern hat und zur Umrechnung der bestimmten Verschiebung der Merkmale in den Bildern der Objektoberfläche mit aus dem Datenspeicher ausgelesenen Korrelationsparametern und/oder Skalierungsparametern in einen Verschiebeweg des Objektes (3) eingerichtet ist.

14. Verfahren zur Ermittlung der dreidimensionalen Form eines Objektes (3) mit einer optischen Messeinrichtung (1) nach einem der vorhergehenden Ansprüche, mit den Schritten:
- Bestimmen eines Höhenprofils eines unter dem Lichtschnittsensor (4) hindurch beförderten Objektes (3) mit dem Lichtschnittsensor (4) anhand einer auf das Objekt (3) projizierten linienförmigen Markierung (L),
- Erfassen von Bildern der Objektoberfläche,
**gekennzeichnet durch**
- Bestimmen einer Verschiebung von Merkmalen in den von der Objektoberfläche erfassten Bildern und
- Ermittlung einer Verschiebung des Objektes (3) aus der bestimmten Verschiebung der Merkmale in den Bildern der Objektoberfläche und aus von dem Höhenprofil des Objektes (3) abgeleiteten jeweiligen Abständen und Maßstäben der von der Objektoberfläche erfassten Bilder.

15. Verfahren nach Anspruch 14, **gekennzeichnet durch** Anpassen einer Optik und/oder Beleuchtungseinheit (5) und/oder Bildfolgefrequenz der optischen Messeinrichtung (1) in Abhängigkeit von dem jeweiligen Abstand für den erfassten Bereich der Objektoberfläche des Objektes (3), der aus dem mit dem Lichtschnittsensor (4) erfassten Höhenprofil abgeleitet wird.

16. Verfahren nach Anspruch 14 oder 15, **gekennzeichnet durch** Auswählen eines 2D-Bildsensors (10) und/oder Ansteuern einer Beleuchtungseinheit (5) der optischen Messeinrichtung (1) zur Beleuchtung der erfassten Objektoberfläche in Abhängigkeit von den mit dem Lichtschnittsensor (4) jeweils aus den Höhenprofilen des Objektes (3) abgeleiteten Abständen für die 2D-Bildregionen mit ihren zugeordneten Beleuchtungselementen .

## Claims

1. Optical measuring device (1) for determining the three-dimensional shape of an object (3), which has at least one light section sensor (4) which has an illumination unit (5) designed to project a linear marking (L) onto the object (3) and at least one image recording unit (6) for detecting the linear marking (L) projected onto the object (3), and has a feed detection unit which is designed to detect the feed path of the object (3) moving under the light section sensor (4) over time (t), wherein the optical measuring device (1) is designed to determine height profiles of the object from the linear marking (L), and to detect images of the surface detected during the movement of the object (3), **characterized in that** the optical measuring device (1) is designed to determine a displacement of features in the images captured from the object surface in a time interval and to determine a displacement of the object (3) in the time interval from the respectively determined displacement of the features in the images of the object surface and respective distances and scales derived from at least one height profile of the object (3) for the images captured from the object surface.

2. Optical measuring device (1) according to claim 1, **characterized in that** the optical measuring device (1) has a data processing unit (7) which is set up as a feed detection unit for evaluating image sections of the images of the object (3) captured with the light section sensor (4) by determining a displacement of features in the image sections.

3. Optical measuring device (1) according to claim 1, **characterized in that** the feed detection unit has a 2D image sensor (10) which is designed to capture images of the surface of the object (3) captured during the movement of the object (3).

4. Optical measuring device (1) according to claim 3, **characterized in that** the optical measuring device (1) is designed to adapt the setting of a lens of the 2D image sensor (10) to quasi-statically changing distance ranges between the lens and the surface areas of the object (3) used by the feed detection unit.

5. Optical measuring device (1) according to claim 3 or 4, **characterized in that** the feed detection unit has a plurality of 2D image sensors (10), each of which is set up to capture images of the surface of the object (3) captured during the movement of the object (3), wherein the plurality of 2D image sensors (10) capture surface areas of the object (3) that are different from one another, and wherein the optical measuring device (1) is set up to select one of the plurality of surface areas for determining the displacement of the object (3) on the basis of the height information on all surface areas captured by the plurality of 2D image sensors (10), which are derived from the height profiles captured with the line intersection sensor (4).

6. Optical measuring device (1) according to claim 3, 4 or 5, **characterized in that** the at least one 2D image sensor (10) is sensitive to a different wavelength than the wavelength of the light section sensor (4).

7. Optical measuring device (1) according to one of the preceding claims, **characterized in that** the feed detection unit further has an additional lighting unit for illuminating the detected surface of the object (3).

8. Optical measuring device (1) according to one of the preceding claims, **characterized in that** the optical measuring device (1) is designed to adapt the illumination of the image area captured by the surface of the object (3) to quasi-statically changing distance ranges between the lens and the surface areas of the object (3) used by the feed detection unit.

9. Optical measuring device (1) according to claim 4 and 8, **characterized in that** the optical measuring device (1) is designed for dynamic adjustment of the setting of the lens and the illumination for distance ranges of the surface areas used for determining the feed rate which change dynamically across the object (3).

10. Optical measuring device (1) according to one of the preceding claims, **characterized in that** the optical measuring device (1) is set up to determine a displacement of features in the images captured from the object surface in an image area which is intersected by the linear marking (L).

11. Optical measuring device (1) according to one of the preceding claims, **characterized in that** the optical measuring device (1) is set up to coordinate the scanning frequency of the light section sensor (4) and the image repetition frequency, which is used to determine a displacement of the object from images acquired one after the other in time.

12. Optical measuring device (1) according to one of the preceding claims, **characterized in that** the optical measuring device (1) has an integrated circuit designed for use in an optical mouse with an image sensor (10) set up to detect an image pixel matrix and with an image evaluation unit for detecting the displacement of features based on the image comparison of image pixel matrices recorded one after the other, wherein the optical measuring device (1) is set up to scale the displacement of features detected by the image evaluation unit based on the scale derived from at least one height profile in order to determine the object displacement of the object (3) taking place at any given time.

13. Optical measuring device (1) according to one of the preceding claims, **characterized in that** the optical device (1) has a data memory with distance-dependent correlation parameters and scaling parameters stored in the data memory and is set up to convert the determined displacement of the features in the images of the object surface with correlation parameters and/or scaling parameters read from the data memory into a displacement path of the object (3).

14. Method for determining the three-dimensional shape of an object (3) with an optical measuring device (1) according to one of the preceding claims, comprising the steps of:
- determining a height profile of an object (3) conveyed beneath the light section sensor (4) with the light section sensor (4) on the basis of a linear marking (L) projected onto the object (3),
- capturing images of the object surface,
**characterized by**:
- determining a displacement of features in the images captured of the object surface, and
- determining a displacement of the object (3) from the determined displacement of the features in the images of the object surface and from the respective distances and scales of the images captured of the object surface, derived from the height profile of the object (3).

15. Method according to claim 14, **characterized by** adapting an optics and/or lighting unit (5) and/or frame rate of the optical measuring device (1) depending on the respective distance for the detected area of the object surface of the object (3), which is derived from the height profile detected with the light section sensor (4).

16. Method according to claim 14 or 15, **characterized by** selecting a 2D image sensor (10) and/or controlling an illumination unit (5) of the optical measuring device (1) for illuminating the detected object surface as a function of the distances for the 2D image regions with their associated illumination elements, each derived from the height profiles of the object (3) using the light section sensor (4).

## Revendications

1. Dispositif de mesure optique (1) pour déterminer la forme tridimensionnelle d'un objet (3), comprenant au moins un capteur de coupe optique (4) qui présente une unité d'éclairage (5), conçue pour projeter un marquage linéaire (L) sur l'objet (3), et au moins une unité de prise de vue (6), conçue pour saisir le marquage linéaire (L) projeté sur l'objet (3), et comprenant une unité de détection de l'avance conçue pour détecter la course d'avance de l'objet (3), déplacé sous le capteur de coupe optique (4), en fonction du temps (t),
le dispositif de mesure optique (1) étant conçu pour déterminer des profils en hauteur de l'objet à partir du marquage linéaire (L) et pour saisir des images de la surface de l'objet (3) détectée lors du mouvement de l'objet (3),
**caractérisé en ce que** le dispositif de mesure optique (1) est conçu pour déterminer un déplacement de caractéristiques dans les images, saisies dans un intervalle de temps, de la surface de l'objet et pour déterminer un déplacement de l'objet (3) dans l'intervalle de temps à partir du déplacement respectif déterminé des caractéristiques dans les images de la surface de l'objet et à partir des distances et des échelles respectives pour les images saisies de la surface de l'objet, déduites d'au moins un profil en hauteur de l'objet (3).

2. Dispositif de mesure optique (1) selon la revendication 1,
**caractérisé en ce que** le dispositif de mesure optique (1) comprend une unité de traitement de données (7) qui, en tant qu'unité de détection de l'avance, est conçue pour évaluer des fragments d'image des images de l'objet (3) saisies par le capteur de coupe optique (4) en déterminant un déplacement de caractéristiques dans les fragments d'image.

3. Dispositif de mesure optique (1) selon la revendication 1,
**caractérisé en ce que** l'unité de détection de l'avance comprend un capteur d'image 2D (10) qui est conçu pour saisir des images de la surface de l'objet (3) détectée lors du mouvement de l'objet (3).

4. Dispositif de mesure optique (1) selon la revendication 3,
**caractérisé en ce que** le dispositif de mesure optique (1) est conçu pour adapter le réglage d'un objectif du capteur d'image 2D (10) à des plages de distance, variant de manière quasi-statique, entre l'objectif et les zones de la surface de l'objet (3) utilisées par l'unité de détection de l'avance.

5. Dispositif de mesure optique (1) selon la revendication 3 ou 4,
**caractérisé en ce que** l'unité de détection de l'avance comprend plusieurs capteurs d'image 2D (10) qui sont chacun conçus pour saisir des images de la surface de l'objet (3) détectée lors du mouvement de l'objet (3), sachant que lesdits plusieurs capteurs d'image 2D (10) détectent des zones de la surface de l'objet (3) différentes les unes des autres et que le dispositif de mesure optique (1) est conçu pour sélectionner respectivement l'une desdites plusieurs zones de surface afin de déterminer le déplacement de l'objet (3) en se basant sur les informations de hauteur concernant toutes les zones de surface détectées par lesdits plusieurs capteurs d'image 2D (10), qui sont déduites des profils en hauteur détectés par le capteur de coupe optique (4).

6. Dispositif de mesure optique (1) selon les revendications 3, 4 ou 5,
**caractérisé en ce que** ledit au moins un capteur d'image 2D (10) est sensible à une longueur d'onde différente de la longueur d'onde du capteur de coupe optique (4).

7. Dispositif de mesure optique (1) selon l'une des revendications précédentes,
**caractérisé en ce que** l'unité de détection de l'avance comprend en outre une unité d'éclairage supplémentaire pour éclairer la surface détectée de l'objet (3).

8. Dispositif de mesure optique (1) selon l'une des revendications précédentes,
**caractérisé en ce que** le dispositif de mesure optique (1) est conçu pour adapter l'éclairage de la zone d'image saisie de la surface de l'objet (3) à des plages de distance, variant de manière quasi-statique, entre l'objectif et les zones de la surface de l'objet (3) utilisées par l'unité de détection de l'avance.

9. Dispositif de mesure optique (1) selon les revendications 4 et 8,
**caractérisé en ce que** le dispositif de mesure optique (1) est conçu pour adapter dynamiquement le réglage de l'objectif et l'éclairage pour des plages de distance, variant dynamiquement sur l'objet (3), des zones de surface utilisées pour la détection de l'avance.

10. Dispositif de mesure optique (1) selon l'une des revendications précédentes,
**caractérisé en ce que** le dispositif de mesure optique (1) est conçu pour déterminer un déplacement de caractéristiques dans les images saisies de la surface de l'objet dans une zone d'image que le marquage linéaire (L) coupe.

11. Dispositif de mesure optique (1) selon l'une des revendications précédentes,
**caractérisé en ce que** le dispositif de mesure optique (1) est conçu pour coordonner la fréquence de balayage du capteur de coupe optique (4) et la fréquence d'images utilisée pour déterminer un déplacement de l'objet à partir d'images saisies successivement dans le temps.

12. Dispositif de mesure optique (1) selon l'une des revendications précédentes,
**caractérisé en ce que** le dispositif de mesure optique (1) comprend un circuit intégré conçu pour être utilisé dans une souris optique, comprenant un capteur d'image (10), conçu pour saisir une matrice de pixels d'image, et une unité d'évaluation d'image, conçue pour détecter le déplacement de caractéristiques à l'aide de la comparaison d'images de matrices de pixels d'image saisies successivement dans le temps, sachant que le dispositif de mesure optique (1) est conçu pour mettre à l'échelle le déplacement respectif de caractéristiques détecté par l'unité d'évaluation d'image à l'aide de l'échelle respective déduite d'au moins un profil en hauteur afin de déterminer le déplacement respectif de l'objet (3) qui se produit.

13. Dispositif de mesure optique (1) selon l'une des revendications précédentes,
**caractérisé en ce que** le dispositif optique (1) comprend une mémoire de données avec des paramètres de corrélation et des paramètres de mise à l'échelle, dépendant de la distance et stockés dans la mémoire de données, et est conçu pour convertir en une course de déplacement de l'objet (3) le déplacement déterminé des caractéristiques dans les images de la surface de l'objet avec des paramètres de corrélation et/ou des paramètres de mise à l'échelle lus dans la mémoire de données.

14. Procédé de détermination de la forme tridimensionnelle d'un objet (3) avec un dispositif de mesure optique (1) selon l'une des revendications précédentes, comprenant les étapes consistant à :
- déterminer, au moyen du capteur de coupe optique (4), un profil en hauteur d'un objet (3) transporté sous le capteur de coupe optique (4), à l'aide d'un marquage linéaire (L) projeté sur l'objet (3),
- saisir des images de la surface de l'objet,
**caractérisé par** les étapes consistant à :
- déterminer un déplacement de caractéristiques dans les images saisies de la surface de l'objet, et
- détecter un déplacement de l'objet (3) à partir du déplacement déterminé des caractéristiques dans les images de la surface de l'objet et à partir des distances et des échelles respectives, déduites du profil en hauteur de l'objet (3), des images saisies de la surface de l'objet.

15. Procédé selon la revendication 14,
**caractérisé par** l'étape consistant à adapter une optique et/ou d'une unité d'éclairage (5) et/ou de la fréquence d'images du dispositif de mesure optique (1) en fonction de la distance respective pour la zone détectée de la surface de l'objet (3), qui est déduite du profil en hauteur détecté au moyen du capteur de coupe optique (4).

16. Procédé selon la revendication 14 ou 15,
**caractérisé par** l'étape consistant à sélectionner un capteur d'image 2D (10) et/ou à commander une unité d'éclairage (5) du dispositif de mesure optique (1), destinée à éclairer la surface détectée de l'objet avec ses éléments d'éclairage associés, en fonction des distances, déduites des profils en hauteur respectifs de l'objet (3) au moyen du capteur de coupe optique (4), pour les régions d'image 2D.
